Europäisches Patentamt

European Patent Office

Office européen des brevets

(19)

(11) **EP 0 778 201 B1**

(12) **FASCICULE DE BREVET EUROPEEN**

(45) Date de publication et mention
de la délivrance du brevet:
**19.09.2001 Bulletin 2001/38**

(51) Int Cl.[7]: **B64G 1/32**, B64G 1/28,
B64G 1/24, G05D 1/08

(21) Numéro de dépôt: **96402613.2**

(22) Date de dépôt: **03.12.1996**

(54) **Procédé de commande d'attitude d'un satellite en orbite basse, a acquisition solaire**

Verfahren zur Lagesteuerung eines Satteliten mit niederer Umlaufbahn mittels Sonnenerfassung

Method for controlling the attitude of a low orbit satellite using solar acquisition

(84) Etats contractants désignés:
**BE DE ES GB IT SE**

(30) Priorité: **06.12.1995 FR 9514418**

(43) Date de publication de la demande:
**11.06.1997 Bulletin 1997/24**

(73) Titulaire: **Astrium SAS**
**78140 Velizy-Villacoublay (FR)**

(72) Inventeur: **Damilano, Patrice**
**31000 Toulouse (FR)**

(74) Mandataire: **Fort, Jacques**
**CABINET PLASSERAUD**
**84, rue d'Amsterdam**
**75440 Paris Cedex 09 (FR)**

(56) Documents cités:
**EP-A- 0 544 242       FR-A- 2 659 061**
**US-A- 4 084 773       US-A- 5 248 118**

**Description**

La présente invention concerne les procédés de contrôle de l'attitude d'un satellite placé sur une orbite suffisamment basse pour que l'intensité du champ magnétique terrestre autorise une mesure d'attitude à l'aide d'un magnétomètre à trois axes et une commande de modification d'attitude par interaction de magnéto coupleurs portés par le satellite avec le champ magnétique terrestre.

Pratiquement cette condition est remplie lorsque le satellite est, sur au moins une partie de son orbite, à une altitude inférieure à 2000 kilomètres.

On connaît déjà un procédé de commande d'attitude permettant de réduire les vitesses de rotation du satellite lorsqu'il est largué par son lanceur et d'orienter un axe lié au satellite normalement au plan de l'orbite. Suivant ce procédé, utilisant une loi dite "en B point" pour indiquer qu'elle fait intervenir la dérivée du champ magnétique terrestre B, on mesure le champ magnétique terrestre suivant les trois axes d'un repère de référence liée au satellite, on dérive les mesures par rapport au temps, on multiplie les dérivées par un gain et on fait passer un courant représentatif du résultat dans des magnéto-coupleurs pour créer des moments magnétiques qui tendent à garder le satellite fixe par rapport aux lignes de force du champ magnétique terrestre.

Ce procédé est simple. Il n'utilise que des capteurs fiables et peu coûteux et les actionneurs qui sont normalement employés sur tout satellite en orbite basse, c'est-à-dire des magnéto-coupleurs, en plus des roues ou volants d'inertie prévus dans tous les cas pour créer un moment cinétique interne au satellite. Il évite l'utilisation de tuyères de propulsion qui consomment des ergols et perturbent l'orbite ou de gyroscopes qui sont peu fiables. Il dissipe de l'énergie proportionnellement à la vitesse de rotation du satellite, de sorte que la convergence est assurée dans tous les cas et que le satellite se stabilise.

En contrepartie, la loi en B point provoque finalement la rotation du satellite à une vitesse égale à deux fois la pulsation orbitale (c'est-à-dire à raison de deux tours sur lui-même par orbite) autour d'un axe normal au plan de l'orbite, c'est-à-dire autour de l'axe de tangage. Pour différentes missions, cette rotation a des inconvénients. En particulier, elle réduit considérablement l'ensoleillement moyen de générateurs solaires portés par le satellite, lorsque ces générateurs ne sont pas orientables, sur des orbites ayant une faible inclinaison i sur l'équateur ou sur des orbites d'inclinaison moyenne lorsque le noeud ascendant est proche de 12 heures ou 24 heures en heure locale.

La présente invention vise à fournir un procédé permettant de réduire les inconvénients essentiels de la loi B point, en effectuant une acquisition solaire sans pour autant exiger la mise en oeuvre de gyroscopes et/ou de tuyères.

Dans ce but, l'invention propose un procédé suivant la revendication 1.

Bien que la commande en tangage puisse être réalisée à l'aide des magnéto-coupleurs, il est plus avantageux de le faire en modifiant la vitesse des volants d'inertie autour d'une valeur de consigne, et annulant alors les commandes des magnéto-coupleurs dont l'axe est suivant les directions de roulis et de lacet.

Dès que le satellite entre dans l'ombre de la terre, c'est-à-dire dès le début de chaque éclipse, les volants sont ramenés à leur vitesse de consigne. Ainsi, la variation de moment cinétique interne est restituée en satellite dès le début de l'éclipse.

Lors des éclipses, la commande en B point est reprise (c'est-à-dire que tous les magnéto-coupleurs sont commandés) et le satellite recommence à tourner lentement autour de l'axe de tangage. La variation de moment cinétique interne emmagasinée par les volants hors éclipse est dissipée du fait de la commande en B point. Il y a ainsi désaturation des volants. A la sortie de l'éclipse, la commande en tangage est activée de nouveau dès que le soleil entre dans le champ de vision du capteur solaire dont est équipé le satellite. Le moment cinétique des roues est modifié pour absorber la rotation en tangage intervenue au cours de l'éclipse.

Ainsi, en ajoutant simplement un capteur solaire dont la précision n'a pas besoin d'être élevée, on peut arrêter la rotation du satellite lorsque cela est souhaitable, par exemple pour maintenir ce dernier dans une orientation telle qu'un axe lié au satellite soit orienté vers le soleil, l'orientation étant choisie de façon à optimiser l'éclairement des générateurs solaires.

Comme le procédé utilisant la loi en B point, le procédé suivant l'invention ne nécessite ni propulsion, ni gyroscope et les seuls capteurs requis sont un magnétomètre trois axes et un capteur solaire. Ce dernier sera choisi à grand champ de vue, de façon à voir le soleil dès la sortie d'éclipse. Seuls des magnéto-coupleurs et des roues ou volants sont utilisés pour commander l'attitude. Les lois de contrôle restent très simples. On peut utiliser une commande proportionnelle. Cependant on utilisera plus fréquemment une loi de type proportionnelle-dérivée.

Les caractéristiques ci-dessus, ainsi que d'autres, apparaîtront mieux à la lecture de la description qui suit d'un mode particulier de réalisation, donné à titre d'exemple, et des revendications.

La description se réfère aux dessins qui l'accompagnent, dans lesquels :

- la figure 1 est un schéma montrant la configuration des lignes de force du champ magnétique terrestre traversées par un satellite circulant sur une orbite polaire ;
- la figure 2 montre les orientations successives d'un satellite placé sur une orbite polaire ou sur une orbite très inclinée sur l'équateur, lorsque le noeud ascendant est proche de 6 heures ou de 18 heures, avec application de la loi B point (configuration des générateurs solaires dite en moulin à vent, c'est-à-dire sensiblement dans le plan de l'orbite) ;

- la figure 3 montre les orientations successives données par la loi B point à un satellite placé sur une orbite très inclinée, dont le noeud ascendant est proche de midi ou minuit en heure locale ;
- la figure 4, similaire à la figure 3, montre les attitudes successives prises par un satellite sur une orbite inclinée avec un noeud ascendant proche de midi ou minuit en heure locale, en cas de mise en oeuvre de l'invention ;
- la figure 5 est un schéma synoptique qui montre la constitution de principe d'un dispositif permettant de mettre en oeuvre la loi B point modifiée conformément à l'invention ;
- la figure 6 montre une constitution possible de satellite auquel est applicable l'invention ;
- la figure 7 est un schéma destiné à faire apparaître les principaux paramètres intervenant dans la commande d'un satellite placé sur une orbite basse, inclinée sur l'équateur.

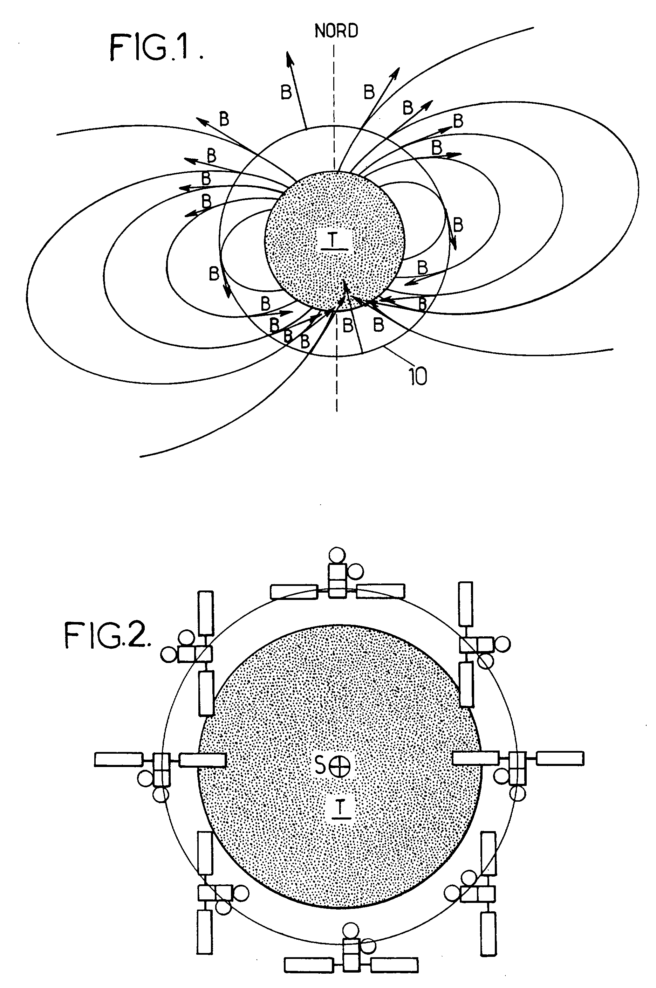

Les lignes de force du champ magnétique de la terre T ont, dans un plan passant par les pôles, l'allure générale montrée en figure 1. Un satellite placé sur une orbite polaire basse 10 croise ces lignes de force suivant un angle important, sauf à proximité de l'équateur, ce qui permet, connaissant la configuration du champ magnétique et la position du satellite sur son orbite, de calculer son attitude à partir des mesures fournies par un magnétomètre trois axes et de créer des couples de rotation à l'aide de magnéto-coupleurs. Au surplus, l'utilisation de la loi en B point permet de dissiper l'énergie de rotation que présente le satellite après séparation du lanceur, ou en cas d'incident, jusqu'à ce que le satellite soit fixe par rapport aux lignes de force du champ magnétique terrestre, ce qui provoque une rotation du satellite, à deux fois la pulsation orbitale $\omega_0$, autour de la normale au plan de l'orbite.

Cette rotation à deux fois la pulsation orbitale s'établit autour de l'axe lié au satellite pour lequel le moment cinétique interne du satellite est aligné avec la vitesse de rotation, donc perpendiculaire au plan de l'orbite. Par un choix approprié de la vitesse de rotation des volants d'inertie et/ou roues de réaction classiquement prévus à bord des satellites, il est possible de choisir la direction du satellite qui reste orientée selon la normale au plan de l'orbite, et cela en ne mettant en oeuvre que le magnétomètre trois axes et les magnéto-coupleurs. Les volants d'inertie sont maintenus ensuite à vitesse constante, pour que l'orientation du moment cinétique interne reste selon l'axe de tangage.

Pour éviter les interactions entre les magnéto-coupleurs et le magnétomètre, les mesures et les mises en oeuvre des magnéto-coupleurs sont effectuées par exemple de façon alternée. Puisque la loi en B point utilise une commande fondée sur la dérivée du champ magnétique, les moments magnétiques rémanents constants du satellite ne perturbent pas la mesure.

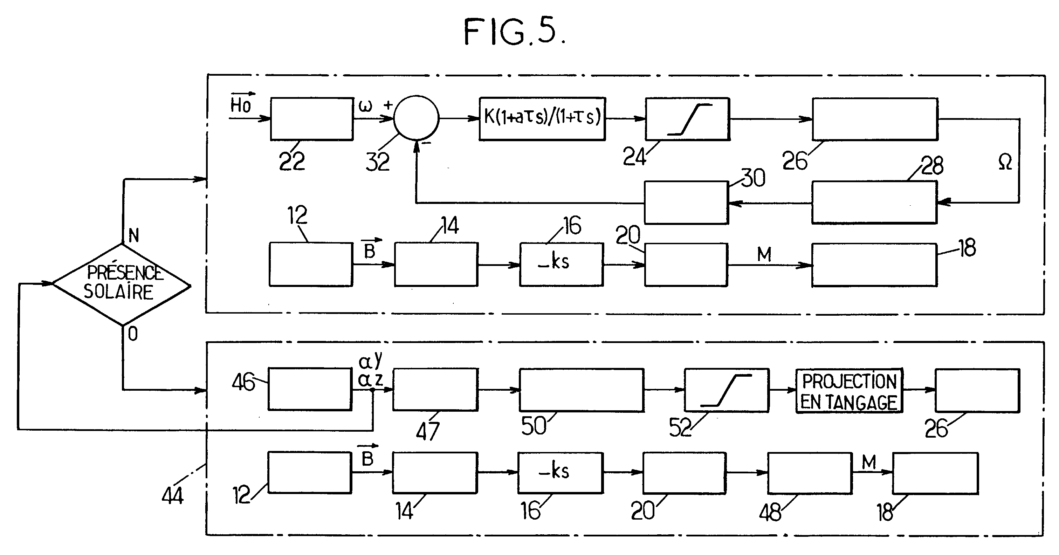

La partie haute de la figure 5 montre des moyens pouvant être mis en oeuvre pour appliquer la loi B point. Ces moyens comportent, d'une part, une chaîne d'asservissement des volants d'inertie du satellite destinée à maintenir le moment cinétique interne du satellite dans une direction constante dans un repère lié au satellite et, d'autre part, une chaîne de commande.

La chaîne de commande comporte un magnétomètre trois axes 12 fournissant des signaux de sortie qui sont filtrés en 14 pour éliminer les parasites et transitoires. Un organe de calcul 16 détermine la dérivée par rapport au temps de la mesure et la multiplie par un gain k. Pour obtenir des constantes de temps d'amortissement égales autour des trois axes, le gain k pour chaque axe est avantageusement normé par le moment d'inertie du satellite autour de l'axe considéré. Le couple de commande appliqué par les magnéto-coupleurs est égal au produit vectoriel du moment magnétique $\vec{M}$ qu'ils créent, par le champ magnétique réel $\vec{B}$. Si le couple requis correspond à un courant trop élevé pour que les magnéto-coupleurs aient une caractéristique qui est linéaire, un organe de calcul supplémentaire 20 tient compte de la saturation en limitant le courant.

Avant intervention de la chaîne de commande, après séparation du satellite et du lanceur, les moteurs des roues sont alimentés pour créer le moment cinétique de consigne. Puis les roues sont asservies par une chaîne d'asservissement qui peut être du genre montré à la partie haute de la figure 5. Le moment cinétique de consigne $H_O$ est introduit à l'entrée et les vitesses $\omega$ à donner aux roues ou volants sont calculées en 22, en tenant compte des moments d'inertie de ces roues ou volants. L'asservissement est avantageusement réalisé par une loi du type proportionnelle-dérivée qu'on peut écrire, avec la notation habituelle :

$$K(1+a\tau s)\ /(1+\tau s).$$

Un circuit de limitation 24 permet de limiter les accélérations des roues.

Le signal de sortie est appliqué aux moteurs des roues 26. La vitesse instantanée est mesurée par un tachymètre 28 dont la sortie attaque, par l'intermédiaire d'un filtre 30, un soustracteur 32 placé à l'entrée du circuit de génération du signal de commande, de façon à maintenir les vitesses aux valeurs de consigne.

Les calculs nécessaires peuvent être effectués soit par des circuits câblés, soit par logiciel, éventuellement en utilisant un calculateur embarqué à bord du satellite et remplissant d'autres fonctions.

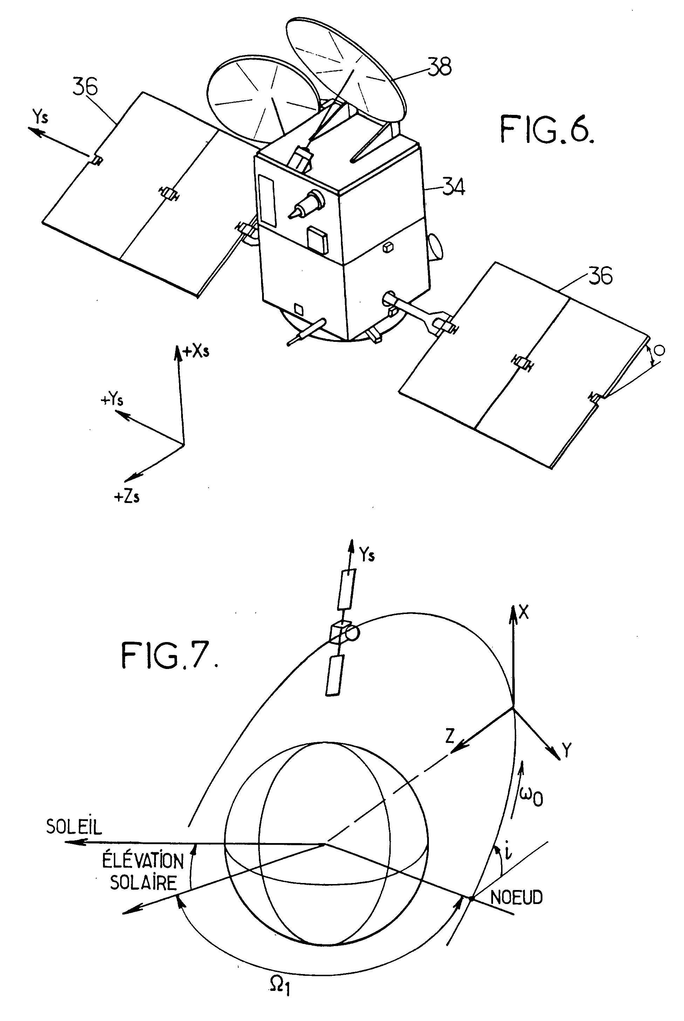

On décrira maintenant les contraintes qu'implique la loi en B point dans le cas particulier d'un satellite du genre montré en figure 6, ayant des panneaux solaires d'orientations fixe. Les notations utilisées seront celles données en figure 7 :

- $\omega_0$ désigne la pulsation orbitale,
- i désigne l'inclinaison de l'orbite sur le plan équatorial,
- $\omega_b$ désigne la pulsation de précession de l'orbite, qui est dérivante si elle n'est pas héliosynchrone,
- $\Omega_1$ désigne la longitude du noeud ascendant NA de l'orbite,
- X,Y et Z désignent les axes de roulis, de lacet et de tangage au point de l'orbite occupé à un instant donné par le satellite.

Le satellite montré à titre d'exemple en figure 6 comporte une caisse 34 portant des antennes 38 et sur laquelle sont montés des générateurs solaires 36 dans une orientation fixe. Classiquement, on désigne par Ys l'axe des générateurs solaires et par $Z_s$ l'axe du satellite qui, dans les conditions d'utilisation des antennes 38, est orienté vers la terre.

Dans le cas illustré, les générateurs solaires portent des cellules sur la face regardant dans la direction -Xs. L'angle d'inclinaison des générateurs sur le plan $Y_s Z_s$ est de 30° dans un cas qu'on peut considérer comme représentatif de satellites utilisés sur des orbites basses inclinées.

Lorsqu'on met en oeuvre la loi B point, l'éclairement moyen des générateurs solaires sur une orbite parcourue par le satellite dépend de l'inclinaison i de cette orbite et de la longitude du noeud ascendant, qui varie à la fréquence angulaire $\omega_0$.

Pour une orbite proche d'une orbite polaire (figure 2), la loi B point est satisfaisante du point de vue de l'éclairement des générateurs solaires.

Lorsque l'heure locale du noeud ascendant est proche de 6h ou 18h, on donne à la vitesse des roues des valeurs telles que le moment cinétique soit orthogonal à la face des générateurs qui portent les cellules solaires. L'éclairement est alors maximal et sensiblement constant (figure 2).

Sur une orbite très inclinées et basse, donc dérivante, on commande les roues ou volants pour donner au moment cinétique interne des orientations différentes selon l'heure locale ou longitude $52_1$ du noeud descendant.

(a) Pour un noeud ascendant proche de 6h, on donne au moment cinétique une orientation opposée à la normale aux générateurs solaires (c'est-à-dire à la direction et au sens de la vitesse angulaire orbitale) ;

(b) Pour un noeud proche de 18h, le moment cinétique est placé selon la normale, c'est-à-dire à l'opposée ;

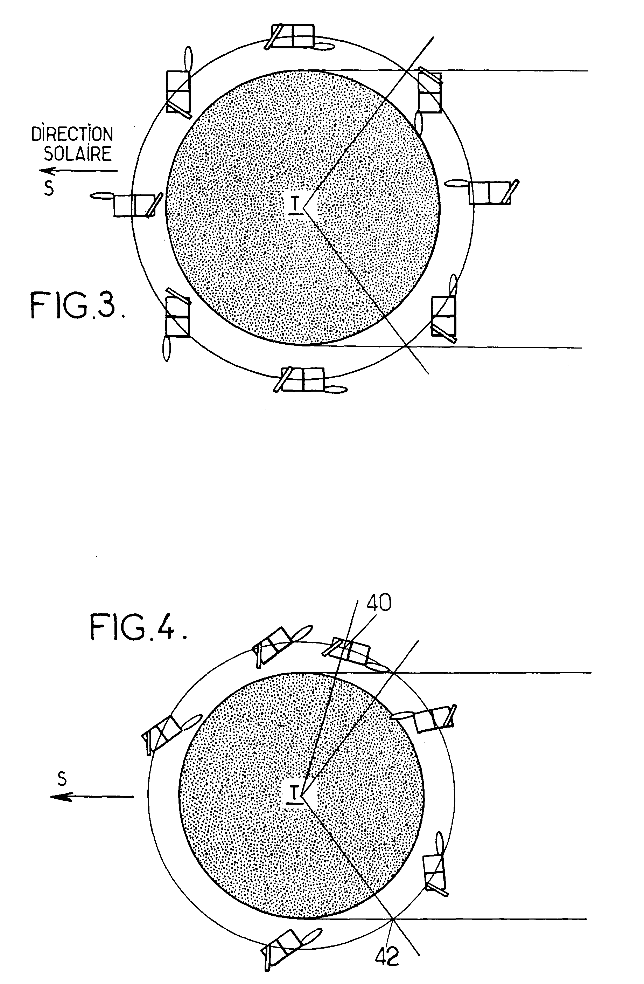

(c) Pour un noeud proche de midi ou minuit, le moment cinétique est selon l'axe des générateurs solaires dans un sens ou l'autre, puisque le satellite tourne autour de cet axe à deux fois la pulsation orbitale (figure 3).

Pratiquement on change l'orientation du moment cinétique interne de façon discrète à intervalles de quelques semaines.

On constate que, pour les orbites proches de midi/minuit, la rotation en tangage à deux fois la pulsation orbitale diminue l'efficacité des générateurs par un facteur 2/3 environ.

L'invention permet de réduire cette diminution, en utilisant une loi en B point, mais avec acquisition solaire, aux orbites basses pour lesquelles les noeuds sont proches de midi et minuit.

Ainsi, on aura trois configurations de consigne, (a), (b) et (c) modifiée par acquisition solaire.

La figure 4 montre schématiquement les attitudes successives prises par un satellite du genre montré en figure 6 dans le dernier cas.

1. La première acquisition solaire a pour but d'arrêter la rotation en tangage du satellite induite par la loi en B point sur les orbites midi/minuit.

Les commandes de roue en tangage sont simplement ajoutées à celles de la loi en B point, avec des gains de contrôle optimisés pour assurer une convergence rapide de l'acquisition..

Quelle que soit la position du satellite, la rotation à deux fois la pulsation orbitale $\omega_0$ induite par la loi en B point garantit que le capteur solaire (non représenté) voit le soleil dans son champ de vue en moins d'une demi-orbite. La première acquisition solaire peut donc toujours être réalisée sur la partie éclairée de l'orbite.

2. Lorsque le satellite rentre en éclipse (point 42), la mesure solaire n'est plus disponible. Le signal fourni par le capteur solaire diminue au-dessous du minimum. Il y a de nouveau mise en rotation à deux fois la pulsation orbitale.

En sortie de l'éclipse de durée maximale, le satellite a tourné d'environ 200°, donc le soleil est déjà dans le champ de vue du senseur. L'acquisition solaire est rapide, car la vitesse de rotation en tangage $2\omega_0$ est très lente.

La commande d'acquisition solaire étant un couple en tangage, obtenu par une boucle à loi proportionnelle dérivée de la mesure filtrée du capteur étant réalisée par les roues, provoque une acquisition rapide et sûre même sur des orbites faiblement inclinées.

3. A la sortie de l'éclipse, le capteur solaire grossier à grand champ de vue acquiert le soleil dès la position 40 sur l'orbite. La rotation en tangage est arrêtée et le moment cinétique correspondant à la vitesse de rotation du corps en tangage est stocké par les roues. Durant le pointage solaire, seul le magnétocoupleur tangage est encore commandé, ce qui ne provoque aucune accumulation de moment cinétique sur les roues.

4. Lors d'une nouvelle entrée en éclipse, les roues sont ramenées à leur moment cinétique de consigne et tous les magnétocoupleurs sont de nouveau commandés suivant la loi en B point, ce qui relance la rotation en tangage du satellite à deux fois la pulsation orbitale.

Lorsqu'aucune mesure n'est disponible, le signal de présence solaire du capteur permet d'envoyer une consigne nulle aux magnétocoupleurs sans changer de mode : le mode à acquisition solaire peut être autorisé lorsque le critère B< minimum prédéterminé pendant un temps $\Delta t$ déterminé est rempli. Pour un satellite sur une orbite fortement inclinée (à 67° par exemple) et une altitude de 1300 km, on peut adopter un minimum de $3.10^{-4}$ rad/s et $\Delta t$ = 15 mn.

Les moyens de mise en oeuvre du procédé peuvent être ceux schématisés sur la figure 5. La sélection entre le mode B point et le mode à acquisition solaire 44 s'effectue par un test sur la présence d'un signal significatif provenant d'un capteur solaire 46.

En mode à acquisition solaire, la commande des magnéto-coupleurs n'est modifiée que par la suppression des commandes des magnétocoupleurs ayant des axes suivant les axes de roulis Xs et de lacet Zs pour fournir un couple de tangage (bloc 48). Le magnétocoupleur selon Ys commande encore le roulis et le lacet.

Une commande proportionnelle à l'angle d'aspect solaire vu par le capteur solaire 46 est envoyée aux roues. Les angles d'aspect solaire détectés sont $\alpha y$ (rotation autour de l'axe Zs) et $\alpha z$ (rotation autour de l'axe Ys). Le couple est proportionnel à la mesure $\alpha z$ et de sens tel qu'il tend à annuler cette grandeur. Les ordres sont élaborés par un organe de calcul 50 après filtrage en 47 pour fournir un couple :

$$C = -k_{sol}(1+a\tau p)\ \alpha z/(1+\tau p) \qquad (1)$$

où $k_{sol}$ désigne un gain.

La loi (1) fait intervenir une avancée de phase du premier ordre qui peut quelquefois être omise.

Les moteurs de roues sont commandés, par l'intermédiaire d'écrêteurs 52 limitant les vitesses d'évolution, de façon à annuler la rotation en tangage. Pour cela, les roues doivent compenser le moment cinétique en tangage du satellite en début d'acquisition, soit :

$$H_y = I_y.2.\omega_0$$

où $I_y$ est le moment d'inertie autour de Ys.

Sur la partie éclairée de l'orbite, le moment cinétique des roues dérive, puisque les couples sont constants en tangage en repère inertiel. Il est apparu que la dérive dans les pires cas est compatible avec la capacité de désaturation des roues habituelles.

En entrée d'éclipse, c'est-à-dire quand le capteur solaire perd le soleil, les roues sont ramenées à leur moment cinétique de consigne. Le satellite absorbe la variation de moment cinétique, et il est entraîné de nouveau. Au cours de l'éclipse, la loi en B point ramène la rotation en tangage à une vitesse d'environ deux fois la pulsation orbitale, et dissipe ainsi la dérive de moment cinétique accumulée dans les roues pendant la partie de l'orbite éclairée. Il y a désaturation des roues par les magnétocoupleurs.

## Revendications

1. Procédé de commande de l'attitude d'un satellite placé sur une orbite basse, suivant lequel on mesure le champ magnétique terrestre suivant les trois axes d'un repère de référence lié au satellite, on dérive les mesures par rapport au temps, on multiplie les dérivées par un gain et on fait passer un courant représentatif du résultat dans des magnéto-coupleurs pour créer des moments magnétiques qui tendent à garder le satellite dans une orientation invariable par rapport aux lignes de force du champ magnétique terrestre,
   **caractérisé en ce que**, en dehors des périodes d'éclipse, on commande en tangage le satellite par modification du moment d'inertie interne en réponse à un signal fourni par un capteur solaire, de façon à maintenir des générateurs solaires qu'il porte orientés vers le soleil.

2. Procédé selon la revendication 1, **caractérisé en ce qu'**on commande l'attitude en tangage en modifiant la vitesse de volants d'inertie autour d'une valeur de consigne et en annulant alors les commandes des magnétocoupleurs dont l'axe est suivant les directions de roulis et de lacet.

3. Procédé selon la revendication 1 ou 2, **caractérisé en ce que** la dite commande en tangage n'est effectuée que sur les orbites inclinées non polaires et uniquement pour les orbites ayant des noeuds proches de midi et minuit en heure locale terrestre.

4. Procédé selon la revendication 1, 2 ou 3, **caractérisé en ce que** la dite commande en tangage n'est effectuée qu'une fois que la dérivée par rapport au temps du champ magnétique mesuré a été ramenée au-dessous d'un seuil déterminé par l'action des magnétocoupleurs.

5. Procédé selon l'une quelconque des revendications 1 à 4, **caractérisé en ce que** les roues ou volants d'inertie sont ramenés à une vitesse de consigne dès le début de chaque éclipse pour restituer au satellite une variation de moment cinétique interne.

6. Procédé selon la revendication 5, **caractérisé en ce que** la commande avec acquisition solaire est abandonnée et le satellite remis en rotation autour de l'axe de tangage au cours des éclipses, avec dissipation du moment cinétique interne.

**Patentansprüche**

1. Verfahren zur Lagesteuerung eines auf einem niedrigen Orbit positionierten Satelliten, bei dem das Erdmagnetfeld längs der drei Achsen eines an dem Satellit liegenden Bezugssystems gemessen wird, die Messungen zeitlich abgeleitet werden, die Ableitungen mit einem Faktor multipliziert werden und ein für das Ergebnis repräsentativer Stromfluß in Magnetokopplern bewirkt wird, um magnetische Momente zu erzeugen, welche dazu dienen, den Satellit mit einer gegenüber den Kraftlinien des Erdmagnetfelds unveränderlichen Orientierung zu führen,

   **dadurch gekennzeichnet, daß** der Satellit außerhalb von Zeiten der Finsternis durch Veränderung des Eigenträgheitsmoments in Antwort auf ein von einem Solaraufnehmer geliefertes Signal derart nickgesteuert wird, daß von ihm getragene Solargeneratoren zur Sonne hin gerichtet bleiben.

2. Verfahren nach Anspruch 1, **dadurch gekennzeichnet, daß** die Nicklage gesteuert wird, indem die Geschwindigkeit von Drallkreiseln um einen Vorgabewert verändert und dann die Steuerung derjenigen Magnetokoppler annulliert wird, deren Achsen in den Roll- und Gierrichtungen liegen.

3. Verfahren nach Anspruch 1 oder 2, **dadurch gekennzeichnet, daß** die Nicksteuerung nur auf den geneigten nichtpolaren Umlaufbahnen und ausschließlich bei denjenigen Umlaufbahnen durchgeführt wird, die Knoten haben, welche in lokaler Erdzeit nahe bei Mittag und Mitternacht liegen.

4. Verfahren nach Anspruch 1, 2 oder 3, **dadurch gekennzeichnet, daß** die Nicksteuerung nur durchgeführt wird, wenn die zeitliche Ableitung des gemessenen Magnetfelds durch die Wirkung der Magnetokoppler unter eine bestimmte Schwelle gebracht ist.

5. Verfahren nach einem der Ansprüche 1 bis 4, **dadurch gekennzeichnet, daß** die Drallräder oder -kreisel bei Beginn jeder Finsternis auf eine Vorgabegeschwindigkeit gebracht werden, um eine Änderung des Eigendralls des Satelliten auszugleichen.

6. Verfahren nach Anspruch 5, **dadurch gekennzeichnet, daß** während der Finsternis die Steuerung mit Sonnenerfassung ausgesetzt und der Satellit unter Verbrauch des Eigendralls in Drehung um die Nickachse zurückversetzt wird.

**Claims**

1. A method of controlling the attitude of an earth satellite placed on a low orbit, comprising : measuring the magnetic field of the earth along three axes of a frame of reference bound to the satellite, derivating the measurements with respect to time, multiplying the derivatives by a gain, and passing a current representative of the result through magnetic torquers to create magnetic torques that act to maintain the satellite in a fixed angular position relative to field lines of said geomagnetic field, **characterized in that**, out of the eclipse periods, an amount of pitch of the satellite is controlled by modifying an internal momentum thereof in response to a signal provided by a solar sensor , so as to maintain solar generators carried by the satellite oriented towards the Sun.

2. A method according to claim 1, **characterized in that** pitch attitude is controlled by modifying speeds of wheels around a set value, while suppressing drive of those magnetic torquers whose axes are along roll and yaw directions of said body.

3. A method according to claim I or 2, **characterized in that** pitch control is only carried out for inclined non polar orbits and only for those orbits which have nodes close to noon and midnight earth local time.

4. Method according to claim 1, 2 or 3, **characterized in that** wherein said pitch control is only carried out after the derivative of the measured magnetic field with respect to time has been reduced below a predetermined threshold by action of the magnetic torquers.

5. Method according to any one of claims 1 - 4, **characterized in that** bringing back the reaction wheels or momentum wheels are brought back to a set speed at the beginning of each eclipse to restore a variation in the internal angular momentum to said satellite.

6. Method according to claim 5, **characterized in that** the control with solar acquisition is abandoned and the satellite is rotated about the pitch axis during eclipses, with consumption of internal momentum.

FIG.1.

FIG.2.

DIRECTION SOLAIRE
S

FIG.3.

FIG.4.

40

S

T

42

# FIG.5.

EP 0 778 201 B1

FIG.6.

FIG.7.